# FASCICULE DE BREVET EUROPEEN

(11) **EP 1 351 564 B1**
(45) Date de publication et mention de la délivrance du brevet: **14.03.2007**
(21) Numéro de dépôt: 02711978.3
(22) Date de dépôt: 16.01.2002
(51) Int. Cl.: A01G 1/06

(54) **DISPOSITIF DE PRELEVEMENT DE GREFFONS**
PFROPFREISENTNAHMEVORRICHTUNG
DEVICE FOR CUTTING GRAFTS

(30) Priorité: 16.01.2001 FR 0100783
(43) Date de publication de la demande: 15.10.2003
(73) Titulaire: Worldwide Vineyards, 83170 Tourves (FR)
(72) Inventeur: BIREBENT, Marc, F-83170 Tourves (FR)
(74) Mandataire: Renaud-Goud, Thierry
(86) Numéro de dépôt international: PCT/FR2002/000172
(87) Numéro de publication internationale: WO 2002/054855

(56) Documents cités:
- WO-A-92/06584
- WO-A-96/03856
- DE-B- 1 145 849
- GB-A- 671 852

## Description

La présente invention concerne un dispositif de prélèvement d'un greffon sur une bouture-greffon.

Elle vise notamment à faciliter les greffages et surgreffages communément dits "en écusson" ou "à l'oeil".

Elle s'applique donc dans l'agriculture, en particulier dans la viticulture, l'arboriculture et l'horticulture, permettant de réduire sensiblement les travaux effectués en pépinières et d'accélérer la mise à fruit. Elle permet aussi de contrôler et de faciliter les modifications variétales et clonales en évitant d'arracher, de replanter ou de repalisser parcelles et vergers.

Les opérations de greffage étaient généralement pratiquées dans les champs de culture. Or les greffes en fente ainsi réalisées produisent des résultats aléatoires, ce que l'on peut expliquer en partie par une grande sensibilité aux conditions climatiques mais surtout par la blessure causée à la souche. Les greffes dites "en oméga" ou "en U" s'avèrent mal adaptées aux travaux des champs. Il s'ensuit que maintenant les opérations de greffage s'effectuent essentiellement sur table au moyen d'outils coûteux et encombrants.

Le surgreffage, pour mémoire le greffage au champ sur la partie aérienne d'une plante, soulève les mêmes difficultés que celles évoquées à propos du greffage. Les méthodes arboricoles de greffage ou de surgreffage dites en écusson sont souvent identifiées par d'autres dénominations telles que "à l'oeil", "écussonnage", "double écusson", "greffe par placage", "greffe par bourgeon", "greffe par copeau", "greffe à oeil dormant" ou "Majorquine" et aussi par le terme espagnol "T-lenoso" ainsi que par les expressions anglo-saxonnes "T-bud" et "chip-bud". Ces méthodes qui présentent un caractère essentiellement manuel sont mises en oeuvre au moyen d'un classique couteau-greffoir. Elles sont donc dangereuses mais de plus, elles requièrent une grande dextérité et une longue expérience de la part des praticiens. En outre, les résultats ne sont pas toujours à la hauteur des espérances.

On connaît également des outils du type sécateur tels que décrits par exemple dans les documents DE 11 45 849 et GB 671 852. Ces outils attaquent la bouture-greffon dans un plan perpendiculaire à son axe, ce qui a pour effet de déchirer les fibres végétales, compromettant par là même la qualité des greffons.

La présente invention a ainsi pour objet un dispositif de prélèvement de greffon aisément manipulable par du personnel ne présentant pas de compétences particulières, d'une simplicité telle qu'il peut être employé n'importe où et, bien entendu, dans les champs. De plus, ce dispositif préserve le greffon tant que faire se peut.

Selon l'invention, un dispositif de prélèvement d'un greffon sur une bouture-greffon comporte une lame et une plaque d'appui de la bouture-greffon, la lame étant contenue dans un plan de coupe, la plaque d'appui formant un angle de coupe longitudinale avec le plan de coupe ; de plus, cet angle de coupe résultant d'une rotation axée sur le tranchant de la lame, le dispositif comporte un organe de déplacement de la lame selon le plan de coupe en direction de la plaque d'appui.

La bouture-greffon est donc attaquée dans les sens de la fibre contrairement aux outils des deux documents ci-dessus pour lesquels l'angle de coupe se définit par une rotation selon un axe contenu dans le plan de coupe et perpendiculaire au tranchant de la lame.

Avantageusement, la plaque d'appui est pourvue d'une butée et elle est éventuellement surmontée d'un élément de maintien flexible.

De préférence, le dispositif comporte un organe de rappel de la lame et il comporte un élément d'affûtage disposé à l'intersection du plan de coupe et de la plaque d'appui.

Suivant une caractéristique additionnelle, le dispositif comporte de plus au moins un guide formant un angle de coupe transversale avec le plan de coupe, l'organe de déplacement permettant également de diriger ladite lame vers ce guide selon ledit plan de coupe.

Selon un premier mode de réalisation, le dispositif comporte deux branches, une première branche supportant la plaque d'appui et une deuxième branche supportant la lame, la deuxième branche qui constitue l'organe de déplacement étant montée pivotante sur la première branche selon un axe perpendiculaire au plan de coupe.

La plaque d'appui est éventuellement munie de graduations.

Selon un deuxième mode de réalisation, le dispositif est constitué par un bâti pourvu d'un couloir dans lequel la lame se déplace en translation, la plaque d'appui étant une paroi d'un premier orifice tubulaire s'étendant d'une face du bâti au couloir.

Avantageusement le dispositif comporte un conduit d'extraction disposé à l'opposé de ce premier orifice par rapport au couloir.

De même, le dispositif comporte de préférence un guide qui est un deuxième orifice tubulaire s'étendant d'une face du bâti au couloir.

Avantageusement, le dispositif comporte alors un conduit de récupération disposé à l'opposé de ce deuxième orifice par rapport au couloir.

Il est par ailleurs envisageable que l'organe de déplacement soit motorisé.

La présente invention apparaîtra maintenant avec plus de détails dans le cadre de la description qui suit d'exemples de réalisation donnés à titre illustratif en se référant aux figures annexées qui représentent :
- la figure 1, une partie d'une bouture-greffon,
- la figure 2, un premier mode de réalisation du dispositif vu dans le plan de coupe,
- la figure 3, la première branche de ce dispositif vue de face, et
- la figure 4, un deuxième mode de réalisation du dispositif vu en coupe.

Les éléments apparaissant dans plusieurs figures sont affectés d'une seule et même référence.

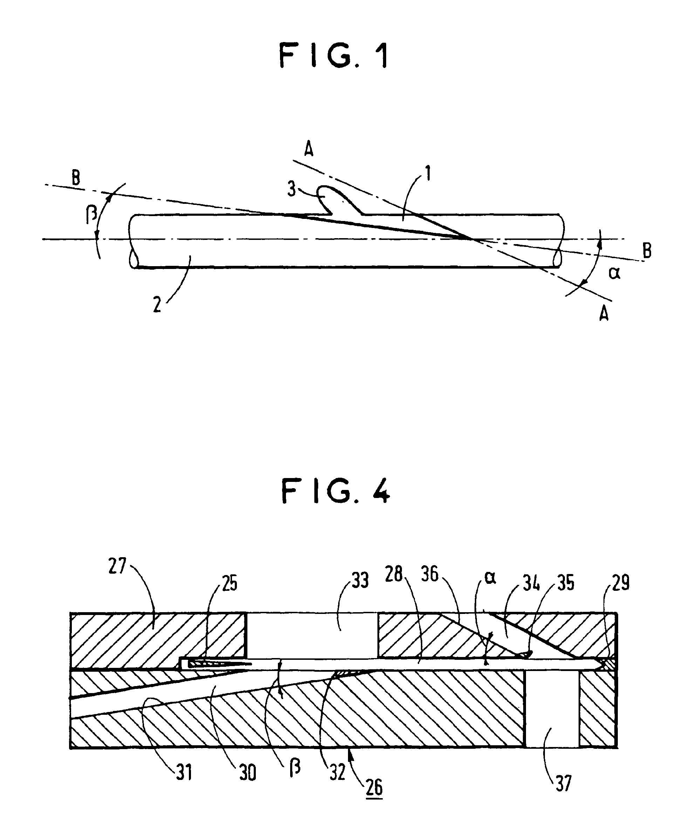

En se reportant à la figure 1, un greffon 1 est obtenu en pratiquant deux coupes sur une tige végétale 2 nommée bouture-greffon. Une coupe transversale AA est réalisée dans un plan formant un angle α de l'ordre de 25° avec l'axe de la tige. Elle débute à quelques millimètres sous un oeil 3 pour s'en éloigner progressivement. Une coupe longitudinale BB est pratiquée dans un plan formant un angle β proche de 10 à 15° avec l'axe de la tige. Elle débute de quelques millimètres à quelques centimètres au-dessus de l'oeil 3 pour venir rejoindre la coupe .transversale dans le coeur de la tige. Idéalement, la droite d'intersection des coupes transversale et longitudinale passe au voisinage de l'axe de la tige.

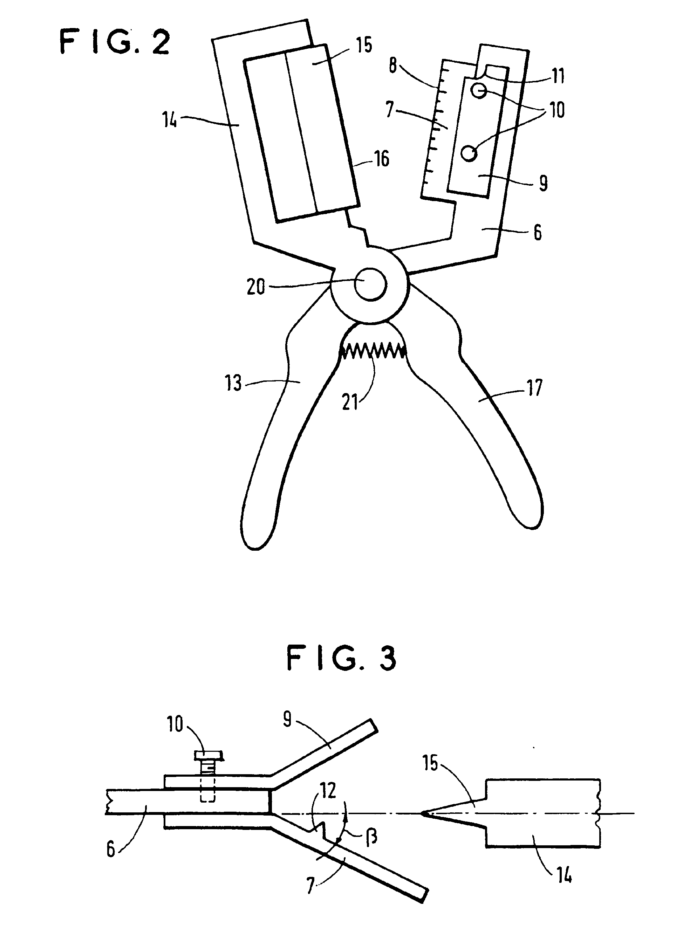

En référence aux figures 2 et 3, selon un premier mode de réalisation de l'invention, un dispositif de prélèvement de greffons s'apparente à un sécateur agricole. Il comporte une première branche 6 sur laquelle est fixée une plaque d'appui 7 qui est inclinée vers le bas d'un angle voisin de l'angle de coupe longitudinale β. De préférence, cette plaque d'appui 7 est pourvue de graduations 8 pour ajuster le positionnement de la bouture-greffon, notamment en fonction de la taille souhaitée pour le greffon.

On prévoit également un élément de maintien 9 du greffon qui se présente ici aussi comme une plaque fixée par des éléments flexibles 10 à la première branche 6. La flexibilité, obtenue par exemple au moyen de ressorts, permet de coincer la bouture-greffon entre la plaque d'appui 7 et l'élément de maintien 9 et d'éviter que le greffon ne tombe suite à l'opération de coupe. Du fait de cet élément de maintien, il peut être judicieux de diminuer l'inclinaison de la plaque d'appui 7.

Avantageusement, l'élément de maintien 9 présente un échancrure 11 qui, combinée avec la plaque d'appui 7, définit un guide dont l'inclinaison est égale à l'angle de coupe transversale α.

On notera ici qu'il serait possible d'agencer d'autres guides en prévoyant d'autre échancrures, par exemple.

Par ailleurs une butée 12 est agencée à l'intersection de la plaque d'appui 7 et de l'élément de maintien 9.

La première branche 6 se termine par une première poignée 13.

Le dispositif comporte une deuxième branche 14 sur laquelle est fixée une lame amovible 15 pourvue d'un tranchant 16 qui fait face à la plaque d'appui 7. Cette deuxième branche 14 se termine par une deuxième poignée 17 et elle est articulée à la première branche grâce à un axe de fixation 20.

Les deux poignées 13, 17 sont reliées par un ressort de rappel 21 qui tend à les écarter pour pouvoir récupérer le greffon lorsqu'il a été prélevé.

Le plan de la lame 15 qui est perpendiculaire à l'axe de fixation 20 définit un plan de coupe par rapport auquel sont référencés les angles de coupe transversale α et longitudinale β. Plus précisément, on peut considérer que ces deux angles résultent d'une rotation axée sur le tranchant 16 de la lame 15 lorsque le dispositif est fermé, c'est à dire lorsque les deux poignées 13, 17 sont rapprochées au maximum.

Le prélèvement d'un greffon commence par la coupe transversale. Pour ce faire, on peut utiliser un couteau-greffoir mais on peut aussi employer le dispositif ci-dessus en disposant d'une main la bouture-greffon en appui sur l'échancrure 11 et sur la plaque d'appui 7 et en actionnant de l'autre main les deux poignées 13, 17.

Ensuite, l'extrémité de la bouture-greffon qui a subi la coupe transversale est introduite contre la butée 12, en appui sur la plaque d'appui 7 et les deux poignées sont à nouveau manoeuvrées.

En référence à la figure 4, selon un deuxième mode de réalisation de l'invention, un dispositif de prélèvement prend la forme d'un bâti 26 muni d'un vérin 27 à mouvement linéaire qui actionne une lame 25. Cette lame se déplace donc en translation dans un couloir 28 qui se termine par un élément d'auto-affûtage 29 tel qu'une pierre à affûter.

Un premier orifice 30 tubulaire est prévu pour réaliser la coupe longitudinale qui débouche d'une part à l'extérieur du bâti et d'autre part dans le couloir 28. La paroi inférieure 31 de ce premier orifice est munie d'une butée 32 au niveau du couloir 28. Elle est inclinée vers le bas de l'angle de coupe longitudinale β. Un conduit d'extraction 33 est prévu reliant le couloir à l'extérieur du bâti, donc disposé à l'opposé du premier orifice par rapport à ce couloir. Ce conduit permet d'extraire le greffon lorsque la lame 25 a été actionnée.

Un deuxième orifice 34 tubulaire est prévu pour réaliser la coupe transversale, orifice qui lui aussi débouche d'une part à l'extérieur du bâti et d'autre part dans le couloir 28. Eventuellement, ce deuxième orifice est muni d'une butée 35 au niveau du couloir 28. Sa paroi inférieure 36 est inclinée vers le bas de l'angle de coupe transversale α. Un conduit de récupération 37 est prévu reliant le couloir à l'extérieur du bâti, donc disposé à l'opposé du deuxième orifice par rapport à ce couloir. Ce conduit permet de récupérer l'extrémité de la bouture-greffon sectionnée par la lame 25.

Naturellement, le vérin 27 pourrait être remplacé par un levier pour permettre un actionnement manuel de la lame 25.

Les exemples de réalisation de l'invention présentés ci-dessus ont été choisis pour leur caractère concret. Il ne serait cependant pas possible de répertorier de manière exhaustive tous les modes de réalisation que recouvre cette invention. En particulier, tout moyen décrit peut-être remplacé par un moyen équivalent sans sortir du cadre de la présente invention.

## Revendications

1. Dispositif de prélèvement d'un greffon sur une bouture-greffon, comportant une lame (15, 25) et une plaque d'appui (7, 31) de ladite bouture-greffon, ladite lame étant contenue dans un plan de coupe, ladite plaque d'appui formant un angle de coupe longitudinale avec ledit plan de coupe,
**caractérisé en ce que** cet angle de coupe résultant d'une rotation axée sur le tranchant (16) de la lame, il comporte un organe de déplacement (17, 27) de la lame selon ledit plan de coupe en direction de ladite plaque d'appui.

2. Dispositif selon la revendication 1, **caractérisé en ce que** ladite plaque (7, 31) d'appui est pourvue d'une butée (12, 32).

3. Dispositif selon l'une quelconque des revendications 1 ou 2, **caractérisé en ce que** ladite plaque d'appui (7) est surmontée d'un élément de maintien flexible (9).

4. Dispositif selon l'une quelconque des revendications précédentes,
**caractérisé en ce qu'**il comporte un organe de rappel de la lame(21, 27).

5. Dispositif selon l'une quelconque des revendications précédentes,
**caractérisé en ce qu'**il comporte un élément d'affûtage (29) disposé à l'intersection dudit plan de coupe et de ladite plaque d'appui (21).

6. Dispositif selon l'une quelconque des revendications précédentes,
**caractérisé en ce qu'**il comporte au moins un guide (7-11, 34) formant un angle de coupe transversale avec ledit plan de coupe, ledit organe de déplacement (17, 27) permettant également de diriger ladite lame (15, 25) vers ce guide selon ledit plan de coupe.

7. Dispositif selon l'une quelconque des revendications précédentes,
**caractérisé en ce qu'**il comporte deux branches, une première branche (6) supportant la plaque d'appui (7) et une deuxième branche (14) supportant la lame (15), la deuxième branche qui constitue ledit organe de déplacement étant montée pivotante sur ladite première branche selon un axe (20) perpendiculaire audit plan de coupe.

8. Dispositif selon la revendication 7, **caractérisé en ce que** ladite plaque d'appui (7) est munie de graduations (8).

9. Dispositif selon l'une quelconque des revendications 1 à 5, **caractérisé en ce qu'**il est constitué par un bâti (26) pourvu d'un couloir (28) dans lequel ladite lame (25) se déplace en translation, ladite plaque d'appui étant une paroi (31) d'un orifice tubulaire (30) s'étendant d'une face dudit bâti audit couloir.

10. Dispositif selon la revendication 9, **caractérisé en ce qu'**il comporte un conduit d'extraction (33) disposé à l'opposé dudit orifice (30) par rapport audit couloir (28).

11. Dispositif selon la revendication 6, **caractérisé en ce qu'**il est constitué par un bâti (26) pourvu d'un couloir (28) dans lequel ladite lame (25) se déplace en translation, ladite plaque d'appui étant une paroi (31) d'un premier orifice tubulaire (30) s'étendant d'une face dudit bâti audit couloir, ledit guide étant un deuxième orifice tubulaire (34) s'étendant d'une face dudit bâti audit couloir.

12. Dispositif selon la revendication 11, **caractérisé en ce qu'**il comporte un conduit d'extraction (33) disposé à l'opposé dudit premier orifice (30) par rapport audit couloir (28).

13. Dispositif selon l'une quelconque des revendication 11 ou 12,
**caractérisé en ce qu'**il comporte un conduit de récupération (37) disposé à l'opposé dudit deuxième orifice (34) par rapport audit couloir (28).

14. Dispositif selon l'une quelconque des revendications précédentes,
**caractérisé en ce que** ledit organe de déplacement est motorisé.

## Claims

1. A device for taking a scion from a scion-source, the device comprising a blade (15, 25) and a bearing plate (7, 31) for pressing against said scion-source, said blade being contained in a cutting plane, said bearing plate forming a longitudinal cutting angle with said cutting plane,
the device being **characterized in that** said cutting angle results from rotation about the cutting edge (16) of the blade, and the device includes a member (17, 27) for moving the blade in said cutting plane towards said bearing plate.

2. A device according to claim 1, **characterized in that** said bearing plate (7, 31) is provided with an abutment (12, 32).

3. A device according to claim 1 or claim 2, **characterized in that** said bearing plate (7) is surmounted by a flexible holding element (9).

4. A device according to any preceding claim, **characterized in that** it includes a blade return member (21, 27).

5. A device according to any preceding claim, **characterized in that** it includes a sharpening element (29) disposed at the intersection between said cutting plane and said bearing plate (21).

6. A device according to any preceding claim, **characterized in that** it includes at least one guide (7-11, 34) forming a cross-cut angle with said cutting plane, said displacement member (17, 27) also enabling said blade (15, 25) to be directed towards said guide along said cutting plane.

7. A device according to any preceding claim, **characterized in that** it comprises two branches, a first branch (6) supporting the bearing plate (7) and a second branch (14) supporting the blade (15), the second branch, which constitutes said displacement member, being pivotally mounted on said first branch about an axis (20) perpendicular to said cutting plane.

8. A device according to claim 7, **characterized in that** said bearing plate (7) is provided with graduations (8).

9. A device according to any one of claims 1 to 5, **characterized in that** it is constituted by a jig (26) provided with a passage (28) in which said blade (25) is moved in translation, said bearing plate being a wall (31) of a tubular orifice (30) extending from one face of said jig to said passage.

10. A device according to claim 9, **characterized in that** it includes an extraction duct (33) disposed on the side of said passage (28) opposite from said orifice (30).

11. A device according to claim 6, **characterized in that** it is constituted by a jig (26) provided with a passage (28) in which said blade (25) moves in translation, said bearing plate being a wall (31) of a first tubular orifice (30) extending from one face of said jig to said passage, said guide being a second tubular orifice (34) extending from one face of said jig to said passage.

12. A device according to claim 11, **characterized in that** it includes an extraction duct (33) disposed on a side of said passage (28) opposite from said first orifice (30).

13. A device according to claim 11 or claim 12, **characterized in that** it includes a recovery duct (37) disposed on a side of said passage (28) opposite from said second orifice (34).

14. A device according to any preceding claim, **characterized in that** said displacement member is motor driven.

## Patentansprüche

1. Vorrichtung zur Entnahme eines Pfropfreises von einem Steckreis, mit einer Klinge (15, 25) und einer Auflageplatte (7, 31) für den Steckreis, wobei die Klinge in einer Schnittebene enthalten ist, wobei die Auflageplatte einen Längsschnittwinkel mit der Schnittebene bildet,
**dadurch gekennzeichnet, dass** sie, da dieser Schnittwinkel aus einer auf die Schneide (16) der Klinge ausgerichteten Drehung resultiert, eine Einrichtung zur Verschiebung (17, 27) der Klinge gemäß der Schnittebene in Richtung der Auflageplatte aufweist.

2. Vorrichtung nach Anspruch 1, **dadurch gekennzeichnet, dass** die Auflageplatte (7, 31) mit einem Anschlag (12, 32) versehen ist.

3. Vorrichtung nach einem der Ansprüche 1 oder 2, **dadurch gekennzeichnet, dass** über der Auflageplatte (7) ein flexibles Halteelement (9) angeordnet ist.

4. Vorrichtung nach einem der vorhergehenden Ansprüche, **dadurch gekennzeichnet, dass** sie eine Rückholeinrichtung (21, 27) für die Klinge aufweist.

5. Vorrichtung nach einem der vorhergehenden Ansprüche, **dadurch gekennzeichnet, dass** sie ein Schleifelement (29) aufweist, das an der Schnittstelle zwischen der Schnittebene und der Auflageplatte (21) angeordnet ist.

6. Vorrichtung nach einem der vorhergehenden Ansprüche, **dadurch gekennzeichnet, dass** sie mindestens eine Führung (7-11, 34) aufweist, die einen Querschnittwinkel mit der Schnittebene bildet, wobei die Verschiebeeinrichtung (17, 27) es ebenfalls ermöglicht, die Klinge (15, 25) gemäß der Schnittebene zu dieser Führung zu führen.

7. Vorrichtung nach einem der vorhergehenden Ansprüche, **dadurch gekennzeichnet, dass** sie zwei Schenkel aufweist, wobei ein erster Schenkel (6) die Auflageplatte (7) und ein zweiter Schenkel (14) die Klinge (15) trägt, wobei der zweite Schenkel, der die Verschiebeeinrichtung bildet, auf dem ersten Schenkel gemäß einer Achse (20) lotrecht zur Schnittebene schwenkbar montiert ist.

8. Vorrichtung nach Anspruch 7, **dadurch gekennzeichnet, dass** die Auflageplatte (7) mit einer Skaleneinteilung (8) versehen ist.

9. Vorrichtung nach einem der Ansprüche 1 bis 5, **dadurch gekennzeichnet, dass** sie aus einem Gestell (26) besteht, das mit einem Durchgang (28) versehen ist, in dem die Klinge (25) sich translatorisch verschiebt, wobei die Auflageplatte eine Wand (31) einer rohrförmigen Öffnung (30) ist, die sich von einer Seite des Gestells zum Durchgang erstreckt.

10. Vorrichtung nach Anspruch 9, **dadurch gekennzeichnet, dass** sie einen Entnahmekanal (33) aufweist, der bezüglich des Durchgangs (28) entgegengesetzt zur Öffnung (30) angeordnet ist.

11. Vorrichtung nach Anspruch 6, **dadurch gekennzeichnet, dass** sie aus einem Gestell (26) besteht, das mit einem Durchgang (28) versehen ist, in dem die Klinge (25) sich translatorisch verschiebt, wobei die Auflageplatte eine Wand (31) einer ersten rohrförmigen Öffnung (30) ist, die sich von einer Seite des Gestells zum Durchgang erstreckt, wobei die Führung eine zweite rohrförmige Öffnung (34) ist, die sich von einer Seite des Gestells zum Durchgang erstreckt.

12. Vorrichtung nach Anspruch 11, **dadurch gekennzeichnet, dass** sie einen Entnahmekanal (33) aufweist, der bezüglich des Durchgangs (28) entgegengesetzt zur ersten Öffnung (30) angeordnet ist.

13. Vorrichtung nach einem der Ansprüche 11 oder 12, **dadurch gekennzeichnet, dass** sie einen Auffangkanal (37) aufweist, der bezüglich des Durchgangs (28) entgegengesetzt zur zweiten Öffnung (34) angeordnet ist.

14. Vorrichtung nach einem der vorhergehenden Ansprüche, **dadurch gekennzeichnet, dass** die Verschiebeeinrichtung motorisiert ist.
